# EUROPEAN PATENT SPECIFICATION

(11) **EP 1 925 489 B1**
(45) Date of publication and mention of the grant of the patent: **30.09.2009**
(21) Application number: 07380311.6
(22) Date of filing: 12.11.2007
(51) Int. Cl.: B60K 37/00

(54) **Instrument panel for automotive vehicles**
Instrumententafel für ein Kraftfahrzeug
Planche de bord pour véhicule automobile

(30) Priority: 21.11.2006 ES 200602519 U
(43) Date of publication of application: 28.05.2008
(73) Proprietor: Seat, S.A., 08760 Martorell (ES)
(72) Inventor: Perez Perez, Fernando, c/o Seat S.A., 08760 Martorell - Barcelona (ES); Demers, Marc, Dr., c/o Seat S.A., 08760 Martorell - Barcelona (ES); Villar Mesa, Eva, c/o Seat S.A., 08760 Martorell - Barcelona (ES)
(74) Representative: Carvajal y Urquijo, Isabel

(56) References cited:
- EP-A- 0 508 323
- EP-A- 1 288 057
- ES-U- 1 064 208
- JP-A- 61 075 025
- JP-A- 2003 170 761
- JP-A- 2006 088 823
- US-A- 3 635 305

## Description

### Field of the Invention

The present invention relates to an instrument panel for automotive vehicles, and more specifically to an instrument panel with a head-up display.

The current trend in automobile manufacture is to provide vehicles with a head-up display offering the driver at all times the values of specific functions of the vehicle, such as speed, engine revolutions, kilometers traveled, consumption, etc.

For the driver to easily access the information, the display must be assembled such that it is easily visible by said driver without the driver having to distract his/her attention from driving.

### Background of the Invention

In traditional panels, head-up displays are assembled directly on the panel, coinciding with an opening therein, having dimensions approximately equal or slightly greater than those of the display. The body or components of the display are housed inside the panel. The defrost duct runs under the panel, crossing under the opening, which is a problem for the assembly and disassembly of the display because once it is assembled, it cannot be disassembled or extracted without having previously extracted the defrost duct, and to do that the entire panel assembly must be disassembled. Due to its dimensions, the defrost duct is a hard-to-manage component which requires more work and, in short, any operation is more complicated and expensive.

JP 2003 170 761 A, discloses an instrument panel having a head-up display and an opening which is closed using a cover which is slightly bigger than the opening and reproduces the surface of the panel. There is also a duct section which, however is not integrated in the cover, but in the head-up display unit itself. US-A-3 635 305 discloses a housing for enclosing instruments in the partitioned chambers integrally formed with the main body of the housing. Said housing further includes an air duct integrally formed therewith.

### Description of the Invention

The object of the present invention is to eliminate the problems set forth by means of a panel with a head-up display, the display of which is installed such that its assembly and disassembly can be carried out very quickly and easily without needing to have to disassemble the panel or the defrost duct.

Therefore, according to the invention the opening in which the display is assembled has dimensions exceeding those of said display and is located between the windshield and the steering wheel. The defrost duct crossing under the opening is interrupted precisely in coincidence with said opening. This opening is closed by means of an outer cover having a slightly larger contour, such that it will abut against the contour or edge of the opening. The cover reproduces the surface of the panel in the area of the opening such that it will virtually complete the surface of the panel.

The mentioned cover has a duct section integrated in the rear part that coincides in dimensions and position with the previously mentioned interrupted duct section or portion of the defrost duct. At its end sections, this duct section integrated in the cover will support sealing joints with the adjacent sections of the defrost duct, running behind the instrument panel. With this set-up, a good seal will be obtained between the duct section integrated in the cover and the adjacent sections of the defrost duct running behind the board.

The cover closing the opening of the board has a window in which the display is assembled. The cover is further provided with anchoring means for anchoring it to the contour of the opening, which means can consist of clamps assembled behind the cover and fixed by elastic deformation of a pin that can be anchored under the edge of the opening, operating like clips.

As can be seen, the solution proposed by the invention is to make an opening in the panel having dimensions that are greater than those of the display, cutting the part of the defrost duct coinciding with said opening and integrating it in the cover, with dimensions and a position fitting with the end sections of the cut duct.

The assembly of the display will thus be carried out in a simple manner because the cover must simply be coupled on the corresponding opening, the latter being fixed by the anchoring means for the anchoring thereof and with the duct section it incorporates, completing the defrost duct. To disassemble the display, it will be enough to simply act behind the panel to release the anchoring means and extracting or separating the cover.

An advantage derived from the set-up of the panel of the invention is that it allows the defrost duct to run as close to the panel as needed, without being any drawback whatsoever for the assembly and disassembly of the display.

The arrangement of the joints between the duct section incorporated in the cover and the end sections of the duct fixed to the panel prevents losses of air from occurring in said duct, which together with the possibility of improving the path of the duct, will prevent the occurrence of problems in the air piping.

### Brief Description of the Drawings

In order to better understand the set-up and features of the panel of the invention, a more detailed description thereof is provided below with the aid of the attached drawings which show a non-limiting embodiment.

In the drawings:
Figure 1 shows a side elevational view of a panel set up according to the invention.
Figure 2 shows a front perspective view of the panel of Figure 3.
Figure 3 shows an upper perspective view of the cover forming part of the panel of the invention.
Figure 4 shows a cross-sectional view of the cover taken according to section line IV-IV of Figure 3.
Figure 5 shows a longitudinal sectional view of the cover taken according to section line V-V of Figure 3.
Figure 6 shows a partial cross-sectional view of the cover taken according to section line VI-VI of Figure 3.

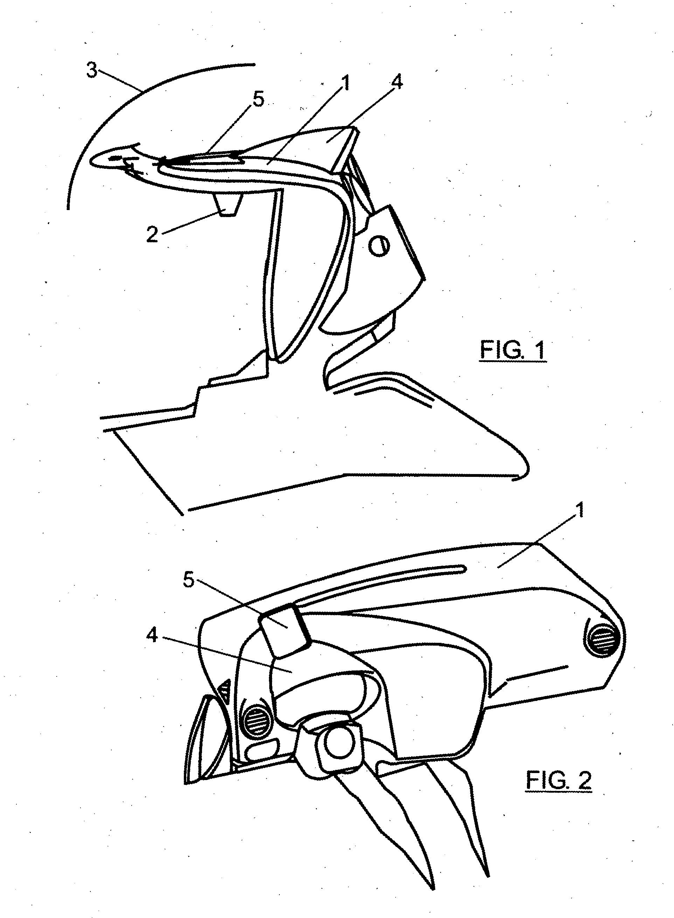

Figures 1 and 2 show the instrument panel 1 of an automotive vehicle, the defrost duct running under such panel and which is referenced as 2. An opening 5, which will have dimensions considerably exceeding those of the head-up display to be assembled, is made in this panel in the area comprised between the windshield 3 and the visor 4, in front of which the steering wheel is located. The defrost duct 2 is interrupted in coincidence with this opening 5 by means of transverse cuts of such duct.

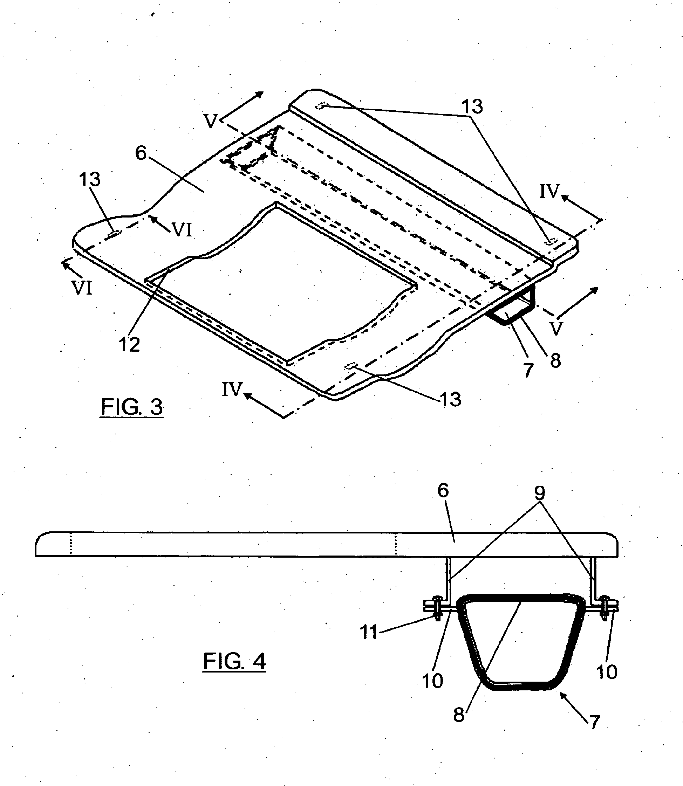

The opening 5 is closed by means of a cover 6, shown in Figure 3, which will have a contour slightly exceeding that of the opening 5 and its outer surface will imitate the relief of the panel corresponding to the area of said opening 5.

The cover 6 incorporates in its rear surface a duct section 7 coinciding with the cut or interrupted section in the defrost duct 2, under the opening 5. This duct section 7 will be sized and positioned such that it coincides with the adjacent sections corresponding to the cuts of the defrost duct 2. Duct section 7 incorporated in the cover 6 can further be provided at its end sections with gaskets 8 assuring a leak-tight closure with the end sections of duct 2.

As can be seen in Figure 4, duct section 7 can be fixed to the cover 6 by means of pins 9 integral with said cover and lugs 10 integral with duct section 7, abutted and fixed by means of screws 11.

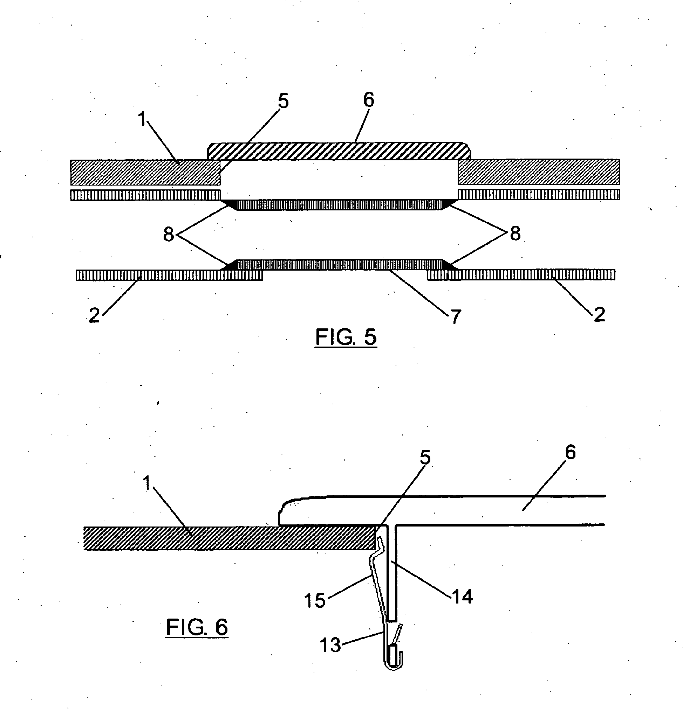

Figure 5 shows how duct section 7, fixed to the cover 6, can be joined to the end sections of the duct 2, this joint being sealed by means of gasket 8.

As can be seen in Figure 3, the cover 6 has an opening 12 sized to couple on the head-up display thereon.

The cover 6 furthermore supports attachment means for attaching it to the panel, which means, as shown in Figure 6, can be formed by clamps 13 fixed for example to a wall or lugs 14 of the cover 6, the clamps of which form an elastically deformable pin 15 which, once it is introduced through the opening 5 of the panel, will recover its position, the lower part resting against the contour of said opening and operating like a stop to prevent the accidental separation of the cover 6.

With the discussed set-up, once the display is fixed to the cover 6, to assemble said cover it is enough to simply position it on the opening 5 and press towards the panel, until deforming the pins 15 of the clamps 13, until reaching the position of Figure 6. To disassemble the cover, it is sufficient to simply act inside the panel 1 on the pins 15, deforming them to release the stop formed against the edge of the opening 5.

## Claims

1. An instrument panel (1) for automotive vehicles, including a head-up display assembled in an opening (5) made in said panel, the defrost duct (2) running thereunder, **characterized in that** the mentioned opening (5) has dimensions exceeding those of the display, is made between the windshield (3) and the steering wheel, and the defrost duct (2) is interrupted in coincidence with such opening (5) which opening (5) is closed by means of an outer cover (6) having a contour slightly greater than that of the opening (5); reproducing the surface of the panel (1) in the area of the opening (5) and partially integrating a duct section (7), coinciding in dimensions and position with the cut portion of the defrost duct (2), said cover (6) having a window in which the display is assembled and anchoring means for anchoring it to the contour of the opening (5).

2. A panel according to claim 1, **characterized in that** sealing joints (8) are arranged between the end sections (7) of the duct integrated in the cover (6) and the adjacent sections of the defrost duct (2) running under the panel (1).

3. A panel according to claim 1, **characterized in that** the anchoring means of the cover (6) consist of clamps (13) assembled behind said cover (6) and fixed by elastic deformation of a pin (15) anchored under the edge of the opening (5).

## Patentansprüche

1. Armaturenbrett (1) für Kraftfahrzeuge, einschließlich einer Head-Up-Anzeige, die in einer Öffnung (5) montiert ist, welche in dem Armaturenbrett vorgesehen ist, wobei der Defrosterkanal (2) darunter verläuft, **dadurch gekennzeichnet, dass** die genannte Öffnung (5) Abmessungen, die größer als jene der Anzeige sind, aufweist, zwischen der Windschutzscheibe (3) und dem Lenkrad vorgesehen ist und der Derrosterkanal (2) in Entsprechung mit dieser Öffnung (5) unterbrochen ist, wobei die Öffnung (5) mittels einer äußeren Abdeckung (6) verschlossen ist, welche einen geringfügig größeren Umfang als jenen der Öffnung (5) aufweist, wobei sie die Oberfläche des Armaturenbretts (1) in dem Bereich der Öffnung (5) nachbildet und teilweise einen Kanalabschnitt (7) einbindet, der den Abmessungen und der Position nach dem ausgeschnittenen Abschnitt des Defrosterkanals (2) entspricht, wobei die Abdeckung (6) ein Fenster, in welchem die Anzeige montiert ist, und Verankerungsmittel zum Verankern derselben an dem Umfang der Öffnung (5) aufweist.

2. Armaturenbrett nach Anspruch 1, **dadurch gekennzeichnet, dass** zwischen den Endabschnitten (7) des in die Abdeckung (6) eingebundenen Kanals und den angrenzenden Abschnitten des Defrosterkanals (2), die unter dem Armaturenbrett (1) verlaufen, Dichtverbindungen (8) angeordnet sind.

3. Armaturenbrett nach Anspruch 1, **dadurch gekennzeichnet, dass** die Verankerungsmittel der Abdeckung (6) aus Bügeln (13) bestehen, die hinter der Abdeckung (6) montiert sind und durch elastische Verformung eines Stifts (15), der unter der Kante der Öffnung (5) verankert wird, fixiert werden.

## Revendications

1. Tableau de bord (1) pour véhicules automobiles, comprenant un affichage tête haute monté dans une ouverture (5) réalisée dans ledit tableau, le conduit de dégivrage (2) passant en-dessous, **caractérisé en ce que** ladite ouverture (5) a des dimensions dépassant celles de l'affichage, est réalisée entre le pare-brise (3) et le volant, et le conduit de dégivrage (2) est interrompu en coïncidence avec une telle ouverture (5), laquelle ouverture (5) est fermée au moyen d'un recouvrement extérieur (6) ayant un contour légèrement supérieur à celui de l'ouverture (5), reproduisant la surface du tableau (1) dans la zone de l'ouverture (5) et intégrant en partie une section de conduit (7), dont les dimensions et la position coïncident avec la partie coupée du conduit de dégivrage (2), ledit recouvrement (6) présentant une fenêtre dans laquelle l'affichage est monté et des moyens d'ancrage permettant de l'ancrer au contour de l'ouverture (5).

2. Tableau selon la revendication 1, **caractérisé en ce que** des joints d'étanchéité (8) sont agencés entre les sections d'extrémité (7) du conduit intégrées dans le recouvrement (6) et les sections adjacentes du conduit de dégivrage (2) s'étendant sous le tableau (1).

3. Tableau selon la revendication 1, **caractérisé en ce que** les moyens d'ancrage du recouvrement (6) consistent en des agrafes (13) montées derrière ledit recouvrement (6) et fixées par déformation élastique d'une tige (15) ancrée sous le bord de l'ouverture (5).
